# EUROPEAN PATENT SPECIFICATION

(11) **EP 0 764 776 B1**
(45) Date of publication and mention of the grant of the patent: **18.12.2002**
(21) Application number: 96830463.4
(22) Date of filing: 06.09.1996
(51) Int. Cl.: F02B 75/00, F02B 33/14

(54) **High-efficiency explosion engine provided with a double-acting piston cooperating with auxiliary feed and inlet units**
Brennkraftmaschine mit hohem Wirkungsgrad mit doppelwirkendem Kolben und Vorrichtungen zur Zufuhr und Einlass
Moteur à combustion à haut rendement à double action avec des dispositifs auxiliaires pour le gavage et admission

(30) Priority: 22.09.1995 IT VR950079
(43) Date of publication of application: 26.03.1997
(73) Proprietor: Montresor, Gianfranco, 37136 Verona (IT)
(72) Inventor: Montresor, Gianfranco, 37136 Verona (IT)
(74) Representative: Klingseisen, Franz, Dipl.-Ing.

(56) References cited:
- DE-A- 3 607 421
- DE-A- 3 842 802
- US-A- 3 340 857

## Description

The present patent for industrial invention refers to a high-efficiency explosion engine of the endothermic type whose peculiarity is to be provided with a double-acting piston cooperating with feed and inlet units.

As it is known, the carburation engines or the internal combustion engines, i.e. the so-called explosion engines, are provided with a cylinder in which a piston may run to impart a cyclic movement to a connecting rod keyed on the driving shaft.

In addition to the cylinder and piston, the four-stroke engines are provided with inlet-valves and exhaust valves as well as opening and closing mechanisms for the valves. In particular the engines of motor-cars are provided with side valves or head valves. The side valves are arranged by the side and open in a side chamber while the head valves are arranged in the bottom of the cylinder immedilately looking on to the inside of the cylinder and called "head". The head valves are preferred technically.

In the two-stroke engines there are not valves usually but only "ports", i.e. holes made in the cylinder. Such holes are uncovered when the piston is near the bottom dead center. It is evident the constructive simplification resulting from such an arrangement although it is even likely the most of the air coming from the washing ports will escape through the exhaust ports which are near the washing ports.

There are several systems for increasing the single powers of the engines, for instance lightening of the alternate masses and enlargement of the valves, which permits to increase the average speed of the piston, the resort to a two-stroke cycle which doubles the power under the same conditions and the use of the so-called "double-acting effect" which consists in closing the cylinder at both ends so that the piston subdivides the cylinder itself in two chambers in both of which a cycle takes place simultaneously.

US-A-3340857 discloses an engine with an double acting piston in a working cylinder. The engine cooperates with auxiliary feed and inlet units. On the central axis of the piston valve pistons are fixed, which slide in sleeves containing inlet ports. Further, the working cylinder is provided with exhaust openings at its central part.

However, the double-acting cylinder type has not been developed in a substantial way up to now because this type of cylinder is considered to be less safe than a single-acting cylinder.

The aim of the present invention is to conceive and carry out a double-acting cylinder explosion engine whose peculiarity is the presence of auxiliary components which permit to optimize the inlet strokes because such auxiliary components are arranged in such a way that the gases to be burnt are not intaken by the piston. The gases are intaken by the auxiliary components.

This object is solved by the engine having the features cited in claim 1.

An immediate advantage obtained with the present invention is a much higher efficiency of the present engine than all the other explosion engines.

All the above aims and advantages are reached according to the present invention by a high-efficiency engine which is provided with a double-acting piston cooperating with auxiliary feed and inlet units, characterized by the fact that it comprises a cylinder in which a piston may slide, a through-shaft being fixed on the central axis of the piston; the through-shaft is divided by the piston in two particularly shaped semi-shafts whose outer ends are provided with auxiliary pistons which slide in suitable inlet chambers, and that at least one of the two free ends of the said semi-shafts is dovetailed to a connecting rod or the like; the said inlet chambers are preferably provided with valves causing the entry of gases; the central part of the cylinder is provided with exhaust openings; the said piston and the relative through-shaft may be displaced axially and cyclically according to two active explosions with a turn of the connecting rod of 360°.

Further characteristics and details of the present invention will result from the following description which describes a preferred embodiment, given as an example not limiting the present invention, on the hand of the accompanying drawings wherein:

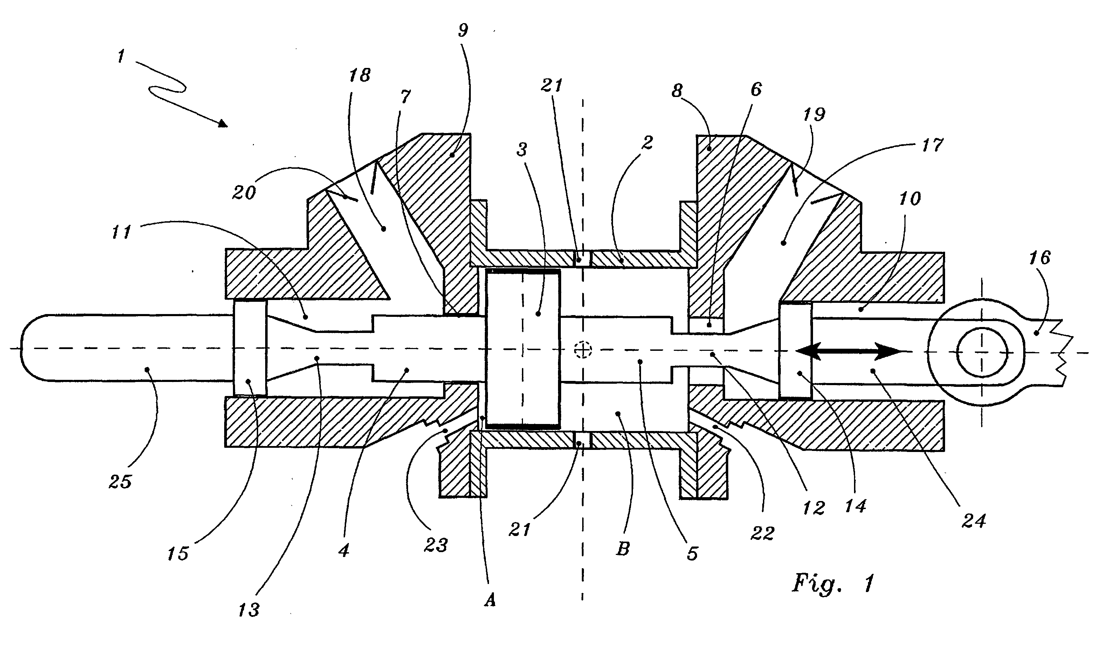

- Figure 1 shows a schematic view of the engine as a whole according to the present invention;

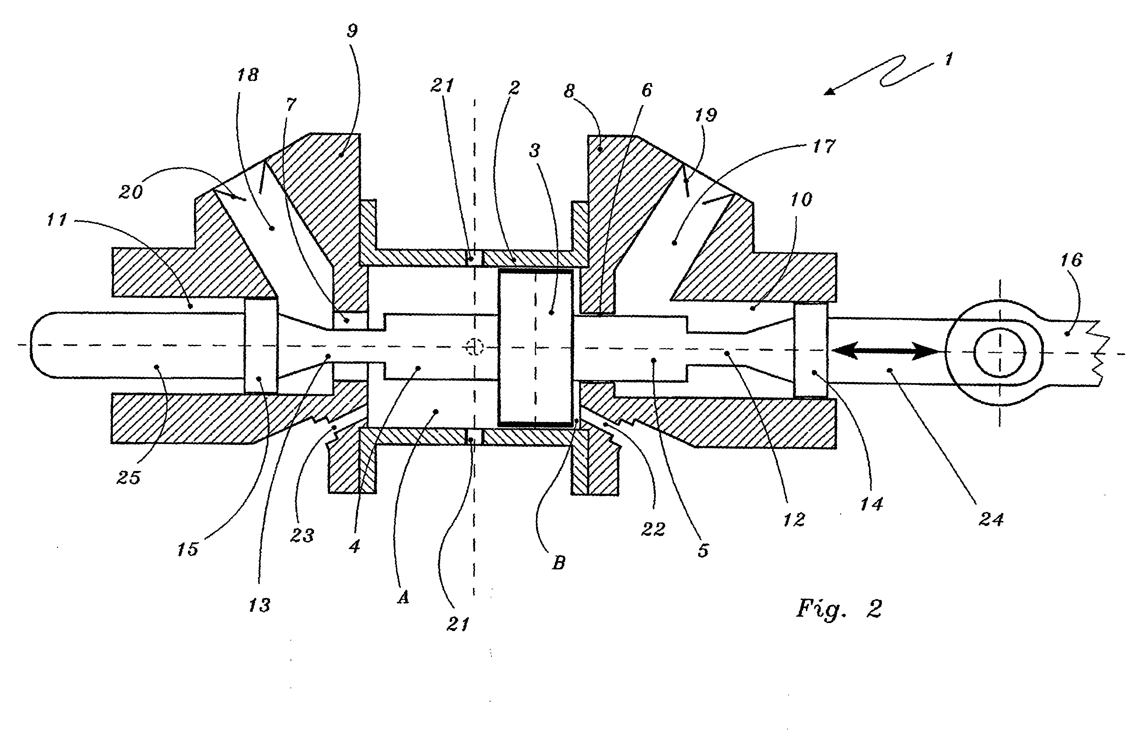

- Figure 2 shows a schematic view of the engine in a working phase contrary to the preceding one.

With reference to the accompanying drawings, number 1 denotes an engine as a whole according to the present invention. In general, this engine consists of a cylinder 2 in which a piston 3 may slide. The central axis of the piston is interested by a through-shaft which is fixed and coaxial to the piston itself. The shaft is subdivided by the piston in two semi-shafts 4 and 5 having the same size and shape. Beginning from the piston 3 outwards, the two semi-shafts 4 and 5 pass through openings 6 and 7, which may be provided with elastic bands or similar gaskets. The said openings 6 and 7 are made in bodies or heads 8 and 9 which are fixed to the two ends of the cylinder 2. In addition, the semi-shafts 4 and 5 pass through suitable inlet chambers 10 and 11 which are obtained in the inside of the heads 8 and 9. Moreover, the semi-shafts 4 and 5 show narrowings or the like 12 and 13. The more external parts of such narrowings end in pistons 14 and 15 which slide in the above described inlet chambers 10 and 11. The narrowings 12 and 13 may be holes, leaks or the like and permit the inlet gas to be conveyed to the respective explosion chambers.

A connecting rod 16 is dovetailed on at least one of the two free ends of the semi-shafts 4 and 5, and precisely on the free end of the semi-shaft 5. The connecting rod 16 receives the cyclic movement for rotating the driving shaft, as described below.

In addition, the bodies or heads 8 and 9 are provided with openings 17 and 18 communicating with the inlet chambers 10 and 11. Inlet valves 19 and 20 are arranged at the mouths of the said inlet chambers.

The median part of the cylinder 2 is provided with exhausts 21. Seats 22 and 23 are obtained at both opposite head sides. Sparking plugs are inserted in the said seats 22 and 23. All the pistons 3, 14 and 15 are provided with elastic bands or other similar gaskets or packings. External parts 24 and 25 of the two semi-shafts 4 and 5 may slide in suitable supports.

The piston 3 subdivides the inside of the cylinder 2 in two chambers indicated with A and B.

Now, an example of working of the engine according to the present invention will be described briefly.

At the beginning of the first cycle, the sparking-plug inserted in the seat 23 causes an explosion in the chamber A in which the mixture had been pressed previously. Then, the piston 3 moves towards the chamber B and presses the gas contained in this chamber.

When the piston 3 accomplishes the above movement, the auxiliary piston 14 draws back and intakes the gas from the valve 19. At the same time, the opposite auxiliary piston 15 introduces the gas in the chamber A while the gases produced by the preceding combustion go out through the exhausts 21.

When the piston 3 reaches the stroke end in the chamber B, the sparking-plug inserted in the seat 22 causes the explosion of the gas pressed and the return movement of the piston 3 in the opposite direction.

In this phase, the auxiliary piston 14 introduces the fuel in the chamber B, which fuel had been intaken previously by the valve 19 while the piston 3 lets the burnt gases to go out through the openings 21 and the auxiliary piston 15 intakes new fuel through the valve 20 and begins a new cycle.

Accordingly, the above described engine can perform two active bursts with one turn of 360° of the connecting rod and that is the reason why the engine according to the present invention is different from the conventional four-stroke and two-stroke engines found on the market. In fact, in the prior art solutions a four-stroke engine performs one burst or active phase with two turns of 360° of the crankshaft while a two-stroke engine performs one burst with one turn of 360°.

Moreoover, the concept of the engine according to the present invention is very different from the concept of theconventional double-acting two-stroke and four stroke engines because the known double-acting engines may be subdivided theoretically in two equal engines while this is not possible in the engine according to the present invention where there is a crossed working. More precisely, the intake and inlet of fuel in a sector is caused in the engine according to the present invention by the action of the opposite sector.

Another important aspect to be considered is the following: the known double-acting two stroke engines have the intake and exhaust openings at the height of the bottom dead center of the cylinder opposite to the explosion part whereas the exhausts in the engine according to the present invention occur in the bottom dead centers and the new fuel is fed from the opposite sides, i.e. from the explosion part.

Accordingly, the semi-shafts 4 and 5 are not only a connecting element for connecting the connecting rod and the piston, they are also essential elements causing the working phases of the engine.

In short, in the engine according to the present invention the fuel is fed from a side of the head of the cylinder and the burnt fuel is discharged through the central part of the cylinder itself. In this way, an excellent washing of the explosion chamber A-B is reached during the substitution of the gases, the consumption of fuel being lower and efficiency being higher.

As an advantage, the engine according to the present invention may be carried out with or without valves, the two working phases being unchanged in a turn of 360° of the connecting rod. Moreover, non -return valves of any type may be used when necessary.

Another advantage is represented by the fact that the application of one or more intake valves for the gases may replace the said narrowings, holes or leaks of the said semi-shafts, which intake valves are controlled by the semi-shafts or other auxiliary mechanisms.

In addition, there is the possibility of using two crankshafts and two connecting rods. In this case, the effort is distributed on two points and as a result, the motion parts are lightened and two force inlets may be used.

The present engine may be carried out according to several versions, i.e. intake with carburettor, injection, with rotating valves and with the possibility of arranging the auxiliary pistons 14 and 15 apart from the coaxial shafts. In fact, the auxiliary pistons 14 and 15 may be arranged also out of the respective semi-shaft. Such pistons may be substituted by other similar components for intaking the gas in the explosion chambers and may be controlled by other elements and not by the same shaft.

In case the engine is provided with valves, several distribution elements such as chain, rods and distribution gears are eliminated.

One of the advantages of the present engine is to eliminate the problem of the ovalization of the cylinder. In addition, there is not the risk of seizure between piston and cylinder since such elements come never in touch with one another. The only elements of contact are the elastic bands.

The present engine has been described and illustrated according to a preferential solution. Anyhow, there may be variants.

## Claims

1. High-efficiency engine comprising
a double-acting piston (3) in a cylinder (2) with explosion chambers (A,B) on both sides of the piston (3),
a through-shaft on the central axis of the piston (3) which shaft is subdivided by the piston (3) in two semi-shafts (4,5), whose outer ends are provided with auxiliary pistons (14,15) which slide in inlet chambers (10,11) separated from the explosion chambers (A,B) by a wall through which the semi-shafts (4,5) extend,
wherein both inlet chambers (10,11) are provided with gas inlet openings (17,18) provided with non-return valves or the like (19,20) and both auxiliary pistons (14,15) have an operating surface turned towards the side of the double-acting piston (3) so that gas is conveyed by the operating side of the auxiliary pistons from the inlet chamber to the respective explosion chamber through a passage means (12,13) provided in each of the semi-shafts (4,5), and
wherein the cylinder (2) is provided with exhaust openings (21) in its central part and at least one of the two free ends of the semi-shafts (4,5) is dovetailed in a connecting rod (16) or the like.

2. High-efficiency engine as claimed in claim 1, **characterized in that** beginning from the piston (3) outwards said two semi-shafts (4, 5) pass through openings (6, 7) which are provided with elastic bands or similar gaskets or packings, which openings are made in bodies or heads (8, 9) which are fixed to both ends of the cylinder (2), and said semi-shafts (4, 5) pass through suitable inlet chambers (10, 11) obtained in the heads (8, 9).

3. High-efficiency engine as claimed in one of the foregoing claims, **characterized in that** said piston (3) and relative coaxial shafts (4, 5) are displaced axially and cyclically according to two active explosions with a turn of 360° of the connecting rod.

4. High-efficiency engine as claimed in one of the foregoing claims, **characterized in that** said passage means (12, 13) of said shafts (4, 5) are narrowings, holes, leaks, openings or the like, whose most external parts end in said auxiliary pistons (14, 15) which slide in the inlet chambers (10, 11).

5. High-efficiency engine as claimed in claim 4, **characterized in that** said narrowings, holes, leaks, openings or the like permit the intaken gas to pass through the respective explosion chamber (A and B).

6. High-efficiency engine as claimed in one of the foregoing claims, **characterized in that** said cylinder (2) is provided with suitable seats (22 and 23) obtained at both opposite sides of the head, in which seats sparking-plugs are inserted.

7. High-efficiency engine as claimed in one of the foregoing claims, **characterized in that** it can be coupled with two crankshafts and therefore with two connecting rods, whereby the effort is distributed on two points, there being the result that the motion components are lightened and two force intakes may be used.

8. High-efficiency engine as claimed in one of the foregoing claims, **characterized in that** one or more valves for the inlet of the gases are provided within the passage means (12, 13) of said semi-shafts, said inlet valves being controlled by the same semi-shafts or other auxiliary mechanisms.

9. High-efficiency engine as claimed in one of the foregoing claims, **characterized in that** it is carried out according to intake versions for carburettors or injection versions, and the openings (17 and 18) are provided with non-return valves such as rotary valves or lamellar valves or the like (19, 20).

10. High-efficiency engine as claimed in one of the foregoing claims, **characterized in that** all the pistons (3, 14, 15) are provided with elastic bands or other similar gaskets and the outer parts (24, 25) of both semi-shafts (4, 5) slide in suitable supports.

## Patentansprüche

1. Motor mit hohem Wirkungsgrad, umfassend
einen doppelt wirkenden Kolben (3) in einem Zylinder (2) mit Explosionskammern (A, B) an beiden Seiten des Kolbens (3),
eine Durchgangswelle an der zentralen Achse des Kolbens (3), welche Welle mittels des Kolbens (3) in zwei Halbwellen (4, 5) aufgeteilt ist, deren äußere Enden mit Hilfskolben (14, 15) ausgestattet sind, die in Einlasskammern (10, 11) gleiten, die gegenüber den Verbrennungskammern (A, B) mittels einer Wand getrennt sind, durch die hindurch sich die Halbwellen (4, 5) erstrecken,
wobei die beiden Einlasskammern (10, 11) mit Gaseinlassöffnungen (17, 18) ausgestattet sind, die mit Rückschlagventilen oder dergleichen (19, 20) ausgestattet sind, und wobei die beiden Hilfskolben (14, 15) eine Arbeitsfläche aufweisen, die in Richtung zu der Seite des doppelt wirkenden Kolben (3) gewandt ist, sodass das Gas mittels der Arbeitsseite der Hilfskolben von der Einlasskammer zu der jeweiligen Explosionskammer durch ein Durchlassmittel (12, 13) hindurch gefördert wird, das in jeder der Halbwellen (4, 5) vorgesehen ist, und
wobei der Zylinder (2) mit Auslassöffnungen (21) in seinem zentralen Teil ausgestattet ist und mindestens eines der beiden freien Enden der Halbwellen (4, 5) mittels einer Schwalbenschwanzführung mit einer Verbindungsstange bzw. Pleuelstange (16) oder dergleichen verbunden ist.

2. Motor mit hohem Wirkungsgrad nach Anspruch 1, **dadurch gekennzeichnet, dass** von den Kolben (3) aus nach außen gehend die beiden Halbwellen (4, 5) durch Öffnungen (6, 7) hindurchtreten, die mit elastischen Bändern bzw. Ringen oder ähnlichen Dichtungen oder Packungen ausgestattet sind, welche Öffnungen in Körpern oder Köpfen (8, 9) ausgebildet sind, die an den beiden Enden des Zylinders (2) befestigt sind, und die Halbwellen (4, 5) durch geeignete Einlasskammern (10, 11) hindurchtreten, die in den Köpfen (8, 9) vorgesehen sind.

3. Motor mit hohem Wirkungsgrad nach irgendeinem der vorhergehenden Ansprüche, **dadurch gekennzeichnet, dass** der Kolben (3) und die zugehörigen koaxialen Wellen (4, 5) axial und zyklisch entsprechend zwei aktiven Explosionen bei einer Umlaufbewegung der Verbindungsstange bzw. Pleuelstange von 360° verschoben werden.

4. Motor mit hohem Wirkungsgrad nach irgendeinem der vorhergehenden Ansprüche, **dadurch gekennzeichnet, dass** die Durchlassmittel (12, 13) der Wellen (4, 5) Einschnürungen, Löcher, Durchtritte, Öffnungen oder dergleichen sind, deren äußerste Teile in den Hilfskolben (14, 15) enden, die in den Einlasskammern (10, 11) gleiten.

5. Motor mit hohem Wirkungsgrad nach Anspruch 4, **dadurch gekennzeichnet, dass** die Einschnürungen, Löcher, Durchtritte, Öffnungen oder dergleichen es gestattet, dass das Einlassgas durch die jeweiligen Explosionskammern (A und B) hindurchtritt.

6. Motor mit hohem Wirkungsgrad nach irgendeinem der vorhergehenden Ansprüche, **dadurch gekennzeichnet, dass** der Zylinder (2) mit geeigneten Sitzen (22 und 23) ausgestattet ist, die an den beiden einander gegenüberliegenden Seiten des Kopfs ausgebildet sind und in welchen Sitzen Zündkerzen eingesetzt sind.

7. Motor mit hohem Wirkungsgrad nach irgendeinem der vorhergehenden Ansprüche, **dadurch gekennzeichnet, dass** er mit zwei Kurbelwellen und daher mit zwei Verbindungsstangen bzw. Pleuelstangen verbunden sein kann, wodurch die Beanspruchung an zwei Stellen verteilt wird, dies mit der Folge, dass die Bewegungskomponenten leicht ausgebildet sind und zwei Krafteingänge verwendet werden können.

8. Motor mit hohem Wirkungsgrad nach irgendeinem der vorhergehenden Ansprüche, **dadurch gekennzeichnet, dass** ein oder mehr Ventile für den Einlass der Gase innerhalb der Durchlassmittel (12, 13) der Halbwellen vorgesehen sind, wobei die Einlassventile mittels der gleichen Halbwellen oder anderer Hilfseinrichtungen gesteuert werden.

9. Motor mit hohem Wirkungsgrad nach irgendeinem der vorhergehenden Ansprüche, **dadurch gekennzeichnet, dass** er entsprechend der Einlass-Vergaserversion oder Einspritzversion aufgebaut ist und die Öffnungen (17 und 18) mit Rückschlagventilen, beispielsweise Rotationsventilen oder Lamellenventilen oder dergleichen (19, 20) ausgestattet sind.

10. Motor mit hohem Wirkungsgrad nach irgendeinem der vorhergehenden Ansprüche, **dadurch gekennzeichnet, dass** alle Kolben (3, 14, 15) mit elastischen Bändern bzw. Ringen oder ähnlichen Dichtungen ausgestattet sind und die äußeren Teile (24, 25) der beiden Halbwellen (4, 5) in geeigneten Stützen gleiten.

## Revendications

1. Moteur à rendement élevé comportant :
un piston à double effet (3) situé dans un cylindre (2) ayant des chambres d'explosion (A, B) sur les deux côtés du piston (3),
un arbre traversant situé sur l'axe central du piston (3), lequel arbre est sous-divisé par le piston (3) en demi-arbres (4, 5), dont les extrémités extérieures sont munies de pistons auxiliaires (14, 15) qui coulissent dans des chambres d'entrée (10, 11) séparées des chambres d'explosion (A, B) par une paroi à travers laquelle s'étendent les demi-arbres (4, 5), dans lequel les deux chambres d'entrée (10, 11) sont munies d'ouvertures d'entrée de gaz (17, 18) munies de clapets antiretour ou analogue (19, 20) et les deux pistons auxiliaires (14, 15) ont une surface active tournée en direction du côté du piston à double effet (3) de sorte que du gaz est transporté par la côté actif des pistons auxiliaires depuis la chambre d'entrée vers la chambre d'explosion respective à travers des moyens formant passage (12, 13) agencés dans chacun des demi-arbres (4, 5), et
dans lequel le cylindre (2) est muni d'ouvertures d'échappement (21) dans sa partie centrale et au moins une des deux extrémités libres des demi-arbres (4, 5) est assemblée à queue d'aronde à une tige de liaison (16) ou analogue.

2. Moteur à rendement élevé selon la revendication 1, **caractérisé en ce qu'**en commençant à partir du piston (3) vers l'extérieur, lesdits deux demi-arbres (4, 5) passent dans des ouvertures traversantes (6, 7) qui sont munies de bandes élastiques ou de joints ou de garnitures similaires, lesquelles ouvertures sont constituées dans des corps ou têtes (8, 9) qui sont fixés aux deux extrémités du cylindre (2), et lesdits demi-arbres (4, 5) passent à travers des chambres d'entrée adaptées (10, 11) obtenues dans les têtes (8, 9).

3. Moteur à rendement élevé selon l'une quelconque des revendications précédentes, **caractérisé en ce que** ledit piston (3) et les arbres coaxiaux relatifs (4, 5) sont déplacés axialement et de manière cyclique conformément à deux explosions actives avec une rotation de 360° de la tige de liaison.

4. Moteur à rendement élevé selon l'une quelconque des revendications précédentes, **caractérisé en ce que** lesdits moyens formant passage (12, 13) desdits arbres (4, 5) sont des rétrécissements, des trous, des écoulements, des ouvertures ou analogue, dont les parties les plus à l'extérieur se terminent dans lesdits pistons auxiliaires (14, 15) qui coulissent dans les chambres d'entrée (10, 11).

5. Moteur à rendement élevé selon la revendication 4, **caractérisé en ce que** lesdits rétrécissements, trous, écoulements, ouvertures ou analogue permettent au gaz entré de passer à travers la chambre d'explosion respective (A et B).

6. Moteur à rendement élevé selon l'une quelconque des revendications précédentes, **caractérisé en ce que** ledit cylindre (2) est muni de sièges adaptés (22, 23) obtenus au niveau des deux côtés opposés de la tête, sièges dans lesquels des bougies sont insérées.

7. Moteur à rendement élevé selon l'une quelconque des revendications précédentes, **caractérisé en ce qu'**il peut être couplé à deux vilebrequins et par conséquent à deux tiges de liaison, de sorte que l'effort est réparti sur deux points, le résultant étant que les composantes de mouvement sont allégées et que deux admissions de force peuvent être utilisées.

8. Moteur à rendement élevé selon l'une quelconque des revendications précédentes, **caractérisé en ce qu'**une ou plusieurs vannes destinées à l'entrée des gaz sont agencées dans les moyens formant passage (12, 13) desdits demi-arbres, lesdites vannes d'entrée étant commandées par ces mêmes demi-arbres ou par d'autres mécanismes auxiliaires.

9. Moteur à rendement élevé selon l'une quelconque des revendications précédentes, **caractérisé en ce qu'**il est mis en oeuvre pour l'admission de versions à carburateur ou de versions à injection, et les ouvertures (17 et 18) sont munies de clapets antiretour tels que des vannes rotatives ou des vannes lamellaires ou analogue (19, 20).

10. Moteur à rendement élevé selon l'une quelconque des revendications précédentes, **caractérisé en ce que** tous les pistons (3, 14, 15) sont munis de bandes élastiques ou autres joints similaires et les parties extérieures (24, 25) des deux demi-arbres (4, 5) coulissent dans des supports adaptés.
